Europäisches Patentamt

European Patent Office

Office européen des brevets

(11) Veröffentlichungsnummer: **0 462 491 A1**

# EUROPÄISCHE PATENTANMELDUNG

(21) Anmeldenummer: 91109529.7

(22) Anmeldetag: 11.06.91

(51) Int. Cl.5: **B44F 1/00**, B44C 5/04, B44F 1/04

(30) Priorität: 18.06.90 DE 4019400

(43) Veröffentlichungstag der Anmeldung:
27.12.91 Patentblatt 91/52

(84) Benannte Vertragsstaaten:
AT BE CH DE ES FR GB IT LI LU NL SE

(71) Anmelder: D. Swarovski & Co.
Postfach 15 Swarovskistrasse 36
A-6112 Wattens/Tirol(AT)

(72) Erfinder: Pöll, Martin
Hubertusweg 5a
A-6122 Fritzens(AT)

(74) Vertreter: Kador & Partner
Corneliusstrasse 15
W-8000 München 5(DE)

(54) Dekorplatte und Verfahren zu deren Herstellung.

(57) Dekorplatte bestehend aus einer unteren Träger-platte (2) mit darauf aufgebrachter strukturierter Kunststoffschicht (4) mit Effektschicht (5, 5') sowie einer oberen Glasplatte (3). Der Zwichenraum (7) zwischen der strukturierten Kunststoffschicht und der oberen Glasplatte kann mit transparentem Kunststoff ausgefüllt werden.

EP 0 462 491 A1

Die Erfindung betrifft eine Dekorplatte und ein Verfahren zu deren Herstellung.

Es sind verschiedenartige Dekorplatten bekannt, jedoch besteht ein Bedarf für neue Dekorplatten, die sich durch besondere ästhetische Effekte auszeichnen.

Der Erfindung liegt daher die Aufgabe zugrunde, neue Dekorplatten mit besonderen ästhetischen Effekten zu schaffen.

Der Erfindung liegt die Erkenntnis zugrunde, daß solche neue Dekorplatten dadurch geschaffen werden können, daß zwischen einer Trägerplatte und einer Glasplatte eine strukturierte, mit Farbeffekten versehene Kunststoffschicht angeordnet ist.

Gegenstand der Erfindung ist eine Dekorplatte bestehend aus einer unteren Trägerplatte, einer darauf aufgebrachten strukturierten Kunststoffschicht mit darauf aufgebrachter Effektschicht, sowie einer davon im Abstand angeordneten oberen Glasplatte.

Durch die strukturierte Kunststoffschicht mit verschiedensten möglichen Farbeffekten werden neue Dekorplatten mit besonderer ästhetischer Wirkung realisiert.

Die strukturierte Kunststoffschicht ist zwischen den beiden Platten vor Beschädigung und Verschmutzung bestens geschützt. Die Oberflächen der Dekorplatte sind plan und leicht reinigbar.

Gegenstand der Erfindung ist ferner ein Verfahren zur Herstellung einer Dekorplatte, bei dem auf einer unteren Trägerplatte eine Kunststoffschicht in strukturierter Form aufgebracht wird, auf die Kunststoffschicht eine oder mehrere Effektschichten aufgebracht werden und im Abstand eine obere Glasplatte angeordnet wird, und gegebenenfalls der Zwischenraum zwischen unterer Trägerplatte und oberer Glasplatte mit transparentem Kunststoff ausgefüllt wird.

Das erfindungsgemäße Verfahren zeichnet sich durch Einfachheit und große Variationsmöglichkeit aus.

Vorzugsweise ist der Zwischenraum zwischen der mit strukturierter Kunststoffschicht und Effektschicht versehenen unteren Trägerplatte und der oberen Glasplatte mit transparentem Kunststoff ausgefüllt. Durch den Verbund der beiden Platten mit Kunststoff, vorzugsweise mit elastischem Kunststoff, wird die Festigkeit und Sicherheit eines Verbundkörpers erzielt. Die Dekorplatten weisen keine unschönen Randbereiche auf, da der Zwischenraum bis zum Rand ausgegossen werden kann.

Vorzugsweise besteht die Effektschicht aus einer dünnen Metallschicht. Auf diese Weise werden besondere ästhetische Wirkungen erzielt. Es wird auch bevorzugt, verschiedenartige Effektschichten nebeneinander vorzusehen, sodaß die Dekorplatte bildhaft und vielfarbig wirkt.

Die strukturierte Kunststoffschicht soll ein gutes Haftvermögen für die Effektschicht aufweisen, damit letztere beim Auftragen weiterer Effektschichten nicht abgelöst wird.

Die strukturierte Kunststoffschicht besteht vorzugsweise aus transparentem Kunststoff, damit die ästhetische Wirkung in erster Linie von den aufgetragenen Effektschichten bewirkt wird.

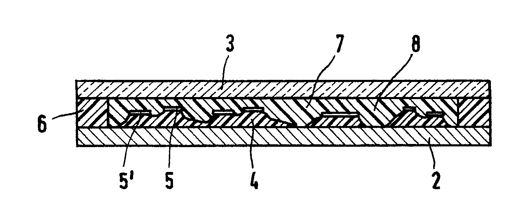

Die Erfindung wird nachstehend anhand der Zeichnung, die eine beispielshafte Ausführungsform zeigt, näher erläutert.

Die einzige Figur zeigt einen Querschnitt durch die erfindungsgemäße Dekorplatte.

Auf der unteren Trägerplatte 2 ist die strukturierte Kunststoffschicht 4 aufgebracht. Auf der Kunststoffschicht liegen verschiedene Effektschichten 5, 5'. Die obere Glasplatte 3 ist im Abstand von der unteren Trägerplatte 2 angeordnet, und zwar auch im Abstand von der Effektschicht. Zwischen den Platten 2, 3 ist im Randbereich ein Abdichtstreifen 6 vorgesehen. Der zwischen den Platten 2, 3 liegende Zwischenraum 7 ist mit transparentem Kunststoff 8 ausgefüllt.

Die Dekorplatten können beliebige Größe aufweisen, beispielsweise 50 x 100 mm oder 100 x 200 mm.

Für die Glasplatten wird übliches Flachglas beliebiger Stärke, beispielsweise 3 bis 10 mm eingesetzt. Die Glasplatten können gefärbt sein.

Für die Trägerplatte können die verschiedensten Materialien verwendet werden, wie beispielsweise Glas, Holz, Metall oder Kunststoff. Wird eine Glasplatte verwendet, so kann diese auf der Ober- oder Unterseite verspiegelt oder mit einer Farbschicht versehen sein. Trägerplatten aus Holz können aus den verschiedensten Holzarten gefertigt sein, insbesondere bieten sich aus ästhetischen Gründen Edelhölzer aller Art an, wie Mahagoni, Teak, Palisander und dergleichen. Einfachere Holzplatten und Trägerplatten aus Metall können gegebenenfalls lackiert oder mit einer Farbschicht versehen sein. Wird als Trägerplatte eine Kunststoffplatte verwendet, so kann diese ebenfalls mit einer Farbschicht versehen sein oder aus farbigem Kunststoff bestehen.

Für die strukturierte Kunststoffschicht wird ein solcher Kunststoff eingesetzt, der sich mittels verschiedener Techniken und Arbeitsweisen auf der unteren Trägerplatte in strukturierter Form anordnen läßt. Dafür eignen sich zahlreiche handelsübliche Bindemittel, insbesondere solche, die nach dem Abtrocknen klebrig bleiben. Dies hat den Vorteil, daß die Effektschicht an der Kunststoffschicht gut haftet. Ein Beispiel ist die wasserlösliche Dispersion BASF 567. Die Konsistenz des Kunststoffes, mehr oder weniger pastös, wird je nach Aufbringtechnik und gewollter Struktur durch Wasser- bzw. Lösungsmittelzusatz eingestellt.

Dem Kunststoff kann beliebige Struktur bzw. ein beliebiges Design gegeben werden. Beispiele sind Ornamente, künstlerisch gestaltete Bilder, auch Schriftzüge und völlig freie Gestaltungen.

Der Kunststoff wird beispielsweise mittels Walze, Bürste oder breite Pinsel aufgetragen. Auch eine Auftragung mit Siebdrucktechnik kommt in Betracht. Der Kunststoff kann nur teilweise flächendeckend auf die Trägerplatte aufgebracht werden. Die Verwendung eines nach der Aushärtung elastischen Kunststoffes wird bevorzugt.

Auf den strukturierten Kunststoff werden ein oder mehrere Effektschichten aufgebracht. Vielfältige Farben und Pigmente eigenen sich dafür.

Es wird jedoch bevorzugt, dür die Aufbringung der Effektschicht Prägefolie bzw. Heißsiegelfolien und auch Plattgold zu verwenden. Bei Präge- bzw. Heißsiegelfolien wird eine Metallschicht, üblicherweise eine Aluminiumschicht, ohne oder mit einem gefärbten Lack überzogen, auf das Substrat übertragen. Für die Dekorplatten wird üblicherweise nicht mit Wärme gearbeitet, sondern die Metallschicht durch Andrücken übertragen. Diese haftet dann an der haftfähigen strukturierten Kunststoffschicht. Es kommen verschiedene Andruckwerkzeuge in Betracht, die wie ein Pinsel oder wie ein Spachtel geführt werden können. Der Andruck kann aber auch mit strukturierten oder glatten Walzen erfolgen. Auf diese Weise wird eine Kaltprägetechnik im Gegensatz zur üblichen Heißprägetechnik realisiert.

Eine zweite oder mehrere verschiedene Effektschichten können in einfacher Weise dadurch aufgebracht werden, daß bei der ersten Effektschicht nur verhältnismäßig wenig Druck ausgeübt wird, sodaß sich diese nur auf die am meisten erhabenen Bereiche des strukturierten Kunststoffes ablegt. Bei Anwendung von mehr Druck bei der zweiten und weiteren Effektschichten werden auch tieferliegende Stellen des strukturierten Kunststoffes erreicht. Die mit einer ersten Effektschicht überzogenen Bereiche bleiben auch bei Aufbringen einer zweiten Effektschicht unverändert, da die zweite Effektschicht auf den bereits mit der ersten Effektschicht belegten Bereichen nicht mehr haftet.

Besondere Effekte werden auch mit Effektschichten, die einen opalisierenden bzw. changierenden Effekt haben, erzielt.

Der Zwischenraum zwischen den Platten kann mit einem geeigneten transparenten Kunststoff ausgegossen werden. Dazu eignen sich insbesondere all jene Kunststoffe, die üblicherweise bei Verbundglas Verwendung finden, beispielsweise die Kunststoffe UCB-A, UCB-15 und UCB-20. UV-härtende Kunststoffe werden bevorzugt. Thermisch härtende Epoxyharze können auch eingesetzt werden.

Der transparente Kunststoff ist üblicherweise durchsichtig. Es kommt jedoch auch in Betracht, diesen einzufärben.

Beim Ausgießen des Zwischenraums, was vorzugsweise bei senkrechter Anordnung der Platten erfolgt, ist es vorteilhaft, die Platten abzustützen, damit sich keine Auswölbungen bilden. Vorzugsweise wird der Zwischenraum bis zum Rand ausgegossen. Dies wird beispielsweise dadurch erreicht, daß der Randbereich mit einer Folie oder dergleichen abgedichtet wird, wobei noch ein Andruckrahmen vorgesehen ist, und dann ausgegossen wird. Die Abdichtung wird nach dem Aushärten des Kunststoffs abgenommen. Der Rand kann geschliffen und poliert werden, sodaß die Dekorplatte einen makellosen Randbereich aufweist.

Es kommt auch in Betracht, im Randbereich zwischen den beiden Platten ein doppelseitig klebendes Kunststoffband vorzusehen und dann auszugießen. Bei dieser Arbeitsweise entsteht jedoch ein Randbereich.

Die erfindungsgemäßen Dekorplatten eignen sich insbesondere zur Fassadengestaltung, als Deckenelemente, als Trennwände und für Tische.

**Patentansprüche**

1. Dekorplatte bestehend aus einer unteren Trägerplatte (2), einer darauf aufgebrachten strukturierten Kunststoffschicht (4), mit darauf aufgebrachter Effektschicht (5, 5') sowie einer davon im Abstand angeordneten oberen Glasplatte (3).

2. Dekorplatte nach Anspruch 1, dadurch gekenzeichnet, daß der Zwischenraum (7) zwischen der mit strukturierter Kunststoffschicht (4) und Effektschicht (5, 5') versehenen unteren Trägerplatte (2) und der oberen Glasplatte (3) mit transparentem Kunststoff ausgefüllt ist.

3. Dekorplatte nach Anspruch 1 oder 2, dadurch gekennzeichnet, daß die Effektschicht (5, 5') aus einer Metallschicht besteht.

4. Dekorplatte nach einem der Ansprüche 1 bis 3, dadurch gekennzeichnet, daß verschiedenartige Effektschichten (5, 5') vorgesehen sind.

5. Dekorplatte nach einem der Ansprüche 1 bis 4, dadurch gekennzeichnet, daß die strukturierte Kunststoffschicht (4) ein gutes Haftvermögen für die Effektschichten (5, 5') aufweist.

6. Dekorplatte nach einem der Ansprüche 1 bis 5, dadurch gekennzeichnet, daß die strukturierte Kunststoffschicht (4) aus transparentem Kunststoff besteht.

7. Verfahren zur Herstellung einer Dekorplatte, bei dem auf einer unteren Trägerplatte eine Kunststoffschicht in strukturierter Form aufgebracht wird, auf die Kunststoffschicht eine oder mehrere Effektschichten aufgebracht werden, und im Abstand eine obere Glasplatte angeordnet wird, und gegebenenfalls der Zwischenraum zwischen unterer Trägerplatte und oberer Glasplatte mit transparentem Kunststoff ausgefüllt wird.

**Europäisches Patentamt**

**EUROPÄISCHER RECHERCHENBERICHT**

Nummer der Anmeldung

**EP 91 10 9529**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | AU-B-5 415 49   (THE D.L. AULD COMPANY) <br> * Seite 5, Zeile 7 - Seite 11, Zeile 20 * * Ansprüche 1,5 * <br> — — — | 1-3,5-7 | B 44 F 1/00 <br> B 44 C 5/04 <br> B 44 F 1/04 |
| Y | GB-A-1 590 116   (E.J. PRICE LIMITED) <br> * das ganze Dokument * <br> — — — | 1-3,5-7 | |
| A | DE-C-3 810 002   (D. SWAROVSKI & CO.) <br> * das ganze Dokument * <br> — — — | 1-7 | |
| A | EP-A-0 215 324   (D. SWAROVSKI & CO.) <br> * das ganze Dokument * <br> — — — | 1,2,4-7 | |
| A | DE-B-2 810 371   (A. SALZER) <br> * das ganze Dokument * <br> — — — | 1-3 | |
| A | DE-A-2 057 148   (E. WACHSMANN) <br> * Seite 5, Zeile 15 - Seite 8, Zeile 7 * <br> — — — — — | 1,3,6 | |
| | | | **RECHERCHIERTE SACHGEBIETE (Int. Cl.5)** <br><br> B 44 F <br> B 44 C |

Der vorliegende Recherchenbericht wurde für alle Patentansprüche erstellt

| Recherchenort | Abschlußdatum der Recherche | Prüfer |
|---|---|---|
| Den Haag | 13 September 91 | DOOLAN G.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument